# EUROPÄISCHE PATENTSCHRIFT

(11) **EP 2 680 414 B1**
(45) Veröffentlichungstag und Bekanntmachung des Hinweises auf die Patenterteilung: **04.12.2019**
(21) Anmeldenummer: 13173178.8
(22) Anmeldetag: 21.06.2013
(51) Int. Cl.: H02K 15/04, H01F 41/06, H02K 3/28

(54) **Verfahren zur Herstellung einer Spule für einen Generator einer Windkraftanlage**
Method for manufacturing a coil for the generator of a wind turbine
Procédé de fabrication d'une bobine pour le générateur d'une éolienne

(30) Priorität: 29.06.2012 DE 102012105768
(43) Veröffentlichungstag der Anmeldung: 01.01.2014
(73) Patentinhaber: VENSYS Energy AG, 66539 Neunkirchen (DE)
(72) Erfinder: Engel, Matthias, 67663 Kaiserslautern (DE)
(74) Vertreter: Bernhardt, Reinhold

(56) Entgegenhaltungen:
- EP-A1- 0 251 207
- EP-A1- 2 621 060
- WO-A1-92/01327
- WO-A1-2012/039201
- DE-B3-102009 032 882
- GB-A- 2 126 505
- US-A1- 2002 008 508
- US-A1- 2005 073 208

## Beschreibung

Die Erfindung betrifft ein Verfahren zur Herstellung einer Spule für einen Generator einer Windkraftanlage, die aus verschiedenen, zumindest in Abschnitten parallel zueinander und nebeneinander angeordneten Leitersträngen gebildet wird, die einzeln verformt und in mehreren Windungen zu Teilspulen gewunden werden, wobei die gewundenen Teilspulen einzeln und getrennt voneinander derart verformt werden, dass verhältnismäßig lange geradlinige, zur Anlage aneinander vorgesehene Abschnitte gebildet werden, und anschließend zu der Spule zusammengesetzt werden.

Aus der WO 2012/039201 A1 geht ein Verfahren zur Herstellung einer rotierenden elektrischen Maschine hervor, bei dem in einem ersten Schritt aus Leitersträngen eine erste Windung und eine zweite Windung geformt werden, in einem zweiten Schritt die erste und die zweite Windung sich überkreuzend angeordnet werden, um eine Spule zu bilden, und in einem dritten Schritt die Spule in Schlitze eines Kerns der elektrischen Maschine eingesetzt werden.

In der WO 92/01327 A1 wird ein Verfahren zur Herstellung einer Statorwicklung für elektrische Maschinen, die vorwiegend für Kraftfahrzeuge eingesetzt werden, beschrieben, bei dem eine vollständig außerhalb eines Statorblechs in Wickelsträngen vorgefertigte Wicklung in einem einzigen Arbeitsgang in Nuten des Statorblechpakets eingeführt werden kann. Ein die Wicklung bildender Leiter wird dazu über die Länge der Nuten des Statorblechpakets mittels eines Biege- und Formgebungsverfahrens in ein vorbestimmtes Profil gepresst.

Die DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, die zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten aufweist, die dafür vorgesehen sind, jeweils einen Wickelkopf der Formspule zu bilden, wobei die Längsseiten um 90° derart gebogen werden, dass die Längsseiten in die Nuten eingelegt werden können und die Wickelkopfseiten von den Längsseiten abgekröpft werden.

Weitere Verfahren zur Herstellung von Spulen für elektrische Maschinen gehen aus der US 2002/008508 A1, der EP 0 251 207 A1, der GB 2 126 505 A und der US 2005/073208 A1 hervor.

Ferner sind durch Benutzung Verfahren bekannt, bei denen die Leiterstränge gemeinsam in eine Spulenform gewunden und anschließend mittels einer Ausformvorrichtung gemeinsam verformt werden. Dabei kann es aufgrund der großen auftretenden Kräfte zu Beschädigungen, insbesondere zu Brüchen, der Leiterstränge selbst oder zu Beschädigungen an Isolierungen der Leiterstränge, kommen. Problematisch ist, dass sich die Beschädigungen bei einer Sichtprüfung oftmals nicht auffinden lassen, da die Leiterstränge selbst von den Isolierungen verdeckt sind und die Isolierungen in den Abschnitten, in denen die Leiterstränge aneinander liegen, teilweise nicht sichtbar sind.

Ferner müssen aufwendige Maßnahmen getroffen werden, um zu verhindern, dass sich die verschiedenen Leiterstränge bei der gemeinsamen Verformung übereinanderschieben. Dazu werden z.B. speziell angefertigte Zwischenlagen zwischen die Leiterstränge gelegt.

Der Erfindung liegt die Aufgabe zugrunde, ein Verfahren der eingangs genannten Art zu schaffen, das einfacher durchführbar ist.

Erfindungsgemäß wird diese Aufgabe dadurch gelöst, dass die Leiterstränge jeweilig in einer Ebene zu den Teilspulen gewunden werden, die Teilspulen in Abschnitten der Leiterstränge zwischen Wickelkopfbereichen, die die genannten geradlinigen Abschnitte der Leiterstränge miteinander verbinden, in entgegengesetzten Richtungen senkrecht zu der Ebene, in der die jeweiligen Leiterstränge zu den Teilspulen gewunden sind, auseinandergespreizt werden, und beim Auseinanderspreizen gebildete Biegungen an Enden der geradlinigen Abschnitte der verschiedenen Leiterstränge versetzt zueinander geformt werden derart, dass die jeweils in der Spule außenliegenden geradlinigen Abschnitte der Teilspulen länger sind als die jeweils innenliegenden geradlinigen Abschnitte, sodass die außenliegenden Biegungen und Abschnitte die innenliegenden Biegungen und Abschnitte umfassen, wobei die Leiterstränge, nachdem sie zu den Teilspulen gewunden worden sind, derart verformt werden, dass sie zumindest in den genannten geradlinigen Abschnitten unmittelbar aneinander anliegend angeordnet werden können.

Da zur separaten Verformung der Leiterstränge geringere Kräfte nötig sind, als bei der gleichzeitigen, gemeinsamen Verformung mehrerer der Leiterstränge, werden die Beschädigungen schon dadurch vermieden, dass zur Verformung nur mit geringeren Kräften an den Leiterstränge angegriffen werden muss. Außerdem treten bei der separaten Verformung besonders große Kräfte an Stellen, an denen die verschiedenen Leiterstränge aneinander liegen, wenn sie gemeinsam verformt werden, nicht auf.

Darüber hinaus ergeben sich die Vorteile, dass die genannten Ausformvorrichtungen nur zur Ausübung der geringeren, zur Verformung der einzelnen Leiterstränge nötigen Kräfte eingerichtet sein müssen und dass geringere Form- und Lagetoleranzen eingehalten werden können.

Ferner lassen sich die einzelnen Leiterstränge, insbesondere wenn verhältnismäßig große Spulen hergestellt werden, schon aufgrund ihres Gewichts einfacher handhaben. Deshalb ist zur Durchführung der Verformung eine im Vergleich geringere Anzahl von Arbeitskräften notwendig. Außerdem können die Leiterstränge getrennt voneinander, vorzugsweise nacheinander, in eine Nut in einem Trägerkörper des Generators eingesetzt werden.

In einer besonders bevorzugten Ausgestaltung der Erfindung werden die Leiterstränge unterschiedlich verformt, um sie zur Anpassung an eine Form der Nut, in die sie gemeinsam einzusetzen sind, möglichst dicht aneinander anordnen zu können. Während es vorstellbar wäre, die Leiterstränge gemeinsam zu Teilspulen zu winden, werden sie separat voneinander zu den Teilspulen geformt.

Die Biegungen an den Enden der geradlinigen, zur Anlage aneinander vorgesehenen Abschnitte der jeweiligen Leiterstränge bzw. Teilspulen werden versetzt zueinander geformt, um eine unmittelbare Anlage der Leiterstränge bzw. der Teilspulen aneinander zu ermöglichen.

In einer bevorzugten Ausführungsform der Erfindung werden die Biegungen derart versetzt geformt, dass je einer der zur Anlage aneinander vorgesehenen geradlinigen Abschnitte soviel kürzer ist als der jeweils andere, dass der eine Leiterstrang bzw. die eine Leiterspule mit dem kürzeren geradlinigen Abschnitt und den daran angrenzenden Biegungen in den jeweils anderen Leiterstrang bzw. die andere Teilspule eingelegt werden kann.

Zweckmäßigerweise werden die Leiterstränge ferner derart verformt, dass in der Spule gleichseitige Enden der Leiterstränge unmittelbar nebeneinander angeordnet sind, wenn die Leiterstränge zu der Spule zusammengesetzt werden.

In einer Ausführungsform der Erfindung werden die Leiterstränge derart verformt, dass sie auch in einem Wickelkopfbereich, der die genannten geradlinigen Abschnitte der Leiterstränge miteinander verbindet, parallel zueinander angeordnet werden können, um eine besonders platzsparende Anordnung der Leiterstränge zu ermöglichen.

In einer weiteren Ausgestaltung der Erfindung werden die Teilspulen, bevor sie zu der Spule zusammengesetzt werden, einzeln, vorzugsweise mit einem elektrisch isolierenden Material, insbesondere einem Isolierband, umwickelt, um sie in der vorgesehenen Form zu halten und eine verbesserte Isolierung zu erreichen. Ferner ist vorstellbar, die Teilspulen teilweise einzeln und abschnittsweise, vorzugsweise an den geradlinigen Abschnitten, gemeinsam oder aber vollständig gemeinsam zu umwickeln.

Zweckmäßigerweise werden die Teilspulen zur Bildung der Spule nebeneinander und aneinanderliegend angeordnet. Sie können dazu gemeinsam oder nacheinander in eine Nut, die in einem Trägerkörper des Generators zur Aufnahme der Spule vorgesehen ist, eingesetzt werden.

Zweckmäßigerweise werden die Teilspulen dazu in Richtung parallel zu den Ebenen, in denen die geradlinigen Abschnitte der Leiterstränge zu den Teilspulen gewickelt sind und/oder senkrecht dazu fluchtend angeordnet. Die Teilspulen können also in Richtung der genannten Ebenen gesehen sowohl neben- als auch hintereinander angeordnet werden.

Es versteht sich, dass die Spule aus zwei oder mehreren der Leiterstränge bzw. Teilspulen gebildet werden kann.

Die erfindungsgemäße Spule ist in Generatoren vorteilhaft verwendbar.

Die Erfindung wird nachfolgend anhand eines Ausführungsbeispiels und den beiliegenden, sich auf dieses Ausführungsbeispiel beziehenden Zeichnungen näher erläutert. Es zeigen:
- Fig. 1: eine erfindungsgemäße Spule in isometrischer Darstellung,
- Fig. 2: ein Teil der Spule nach Fig. 1 in Seitenansicht,
- Fig. 3: die Spule nach Fig. 1 in Seitenansicht teilweise im Schnitt,
- Fig. 4: Teile der Spule nach Fig. 1 in Draufsicht,
- Fig. 5: die Spule nach Fig. 1 in Draufsicht,
- Fig. 6: einen Teil eines Generators, der mehrere der Spulen nach Fig. 1 aufweist,
- Fig. 7: einen größeren Teil des Generators nach Fig. 6, und
- Fig. 8: eine weitere erfindungsgemäße Spule teilweise im Schnitt.

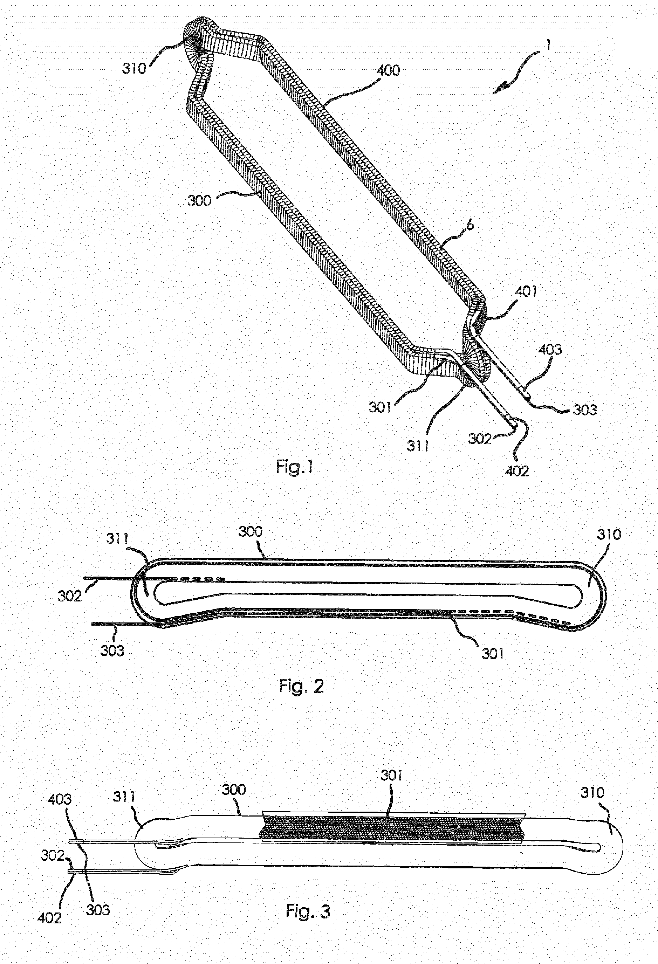

In Fig. 1 ist eine erfindungsgemäße Spule für einen Generator einer Windkraftanlage gezeigt, die aus zwei nebeneinander angeordneten Teilspulen 300,400 gebildet ist. Fig. 2 zeigt am Beispiel der Teilspule 300, wie die Teilspulen 300,400 aufgebaut sind. Sie weisen flache Leiterstränge 301,401 auf, die einen rechteckigen Querschnitt aufweisen und umlaufend in mehreren Windungen zu den jeweiligen Teilspulen 300,400 gewickelt worden sind. Die Leiterstränge 301,401 sind einzeln durch eine Ummantelung isoliert worden und liegen, wie insbesondere auch im teilweisen Schnitt in Fig. 3 gezeigt ist, in den Windungen aneinander an.

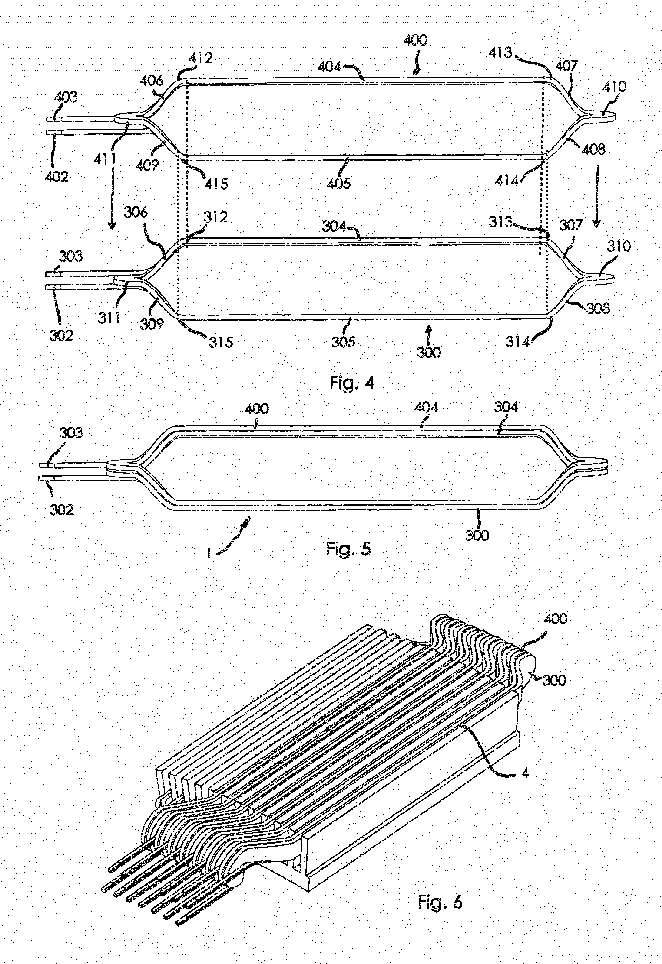

Die Leiterstränge 301,401 werden zunächst einzeln flach in einer einzigen Ebene zu den Teilspulen 300,400 gewunden. Anschließend werden zur Bildung der erfindungsgemäßen Spule 1 mittels einer Ausformvorrichtung einzeln und getrennt voneinander verformt. Wie insbesondere Fig. 4 zu entnehmen ist, werden die Teilspulen 300,400 derart verformt, dass verhältnismäßig lange geradlinige Teilabschnitte 304,305,404,405 gebildet werden. Dazu werden die Teilspulen 300,400 in entgegengesetzten Richtungen senkrecht zu einer Ebene, in der die jeweiligen Leiterstränge 301,401 ursprünglich angeordnet sind, auseinandergespreizt. Abschnitte 310,311,410,411, in denen die Leiterstränge 301,401 zur Bildung der Windungen unter Bildung eines Halbkreises bereits vorher gebogen waren, bleiben in der ursprünglichen Ebene und sind mit den jeweiligen geradlinigen Abschnitten 304,305,404,405 über schräge Abschnitte 306 bis 309, 406 bis 409 verbunden.

Wie insbesondere den Fig. 4 und 5 zu entnehmen ist, werden die Teilspulen 300,400 unterschiedlich verformt, um sie zur Bildung der erfindungsgemäßen Spule 1 möglichst dicht aneinander und in Richtung senkrecht zu den Ebenen gesehen, in denen die Leiterstränge 301,401 zu den Teilspulen 300,400 gewunden sind, fluchtend anordnen zu können. Die in der Spule 1 jeweils außenliegenden geradlinigen Abschnitte 305,404 der Teilspulen 300,400 werden länger vorgesehen als die in der Spule 1 innenliegenden geradlinigen Abschnitte 304,405, sodass die außenliegenden Teilabschnitte 305,404 die innenliegenden Abschnitte 304,405 umfassen. Dazu werden nebeneinander anzuordnende Biegungen 312,412,313,413,314,414,315,415 versetzt zueinander in die jeweilige Teilspule 300,400 eingeformt.

Dadurch wird es möglich, die Leiterstränge 301,401 der Teilspulen 300,400, wenn sie zu der Spule 1 zusammengesetzt werden, unmittelbar nebeneinander anzuordnen, insbesondere derart, dass sie die geradlinigen Abschnitte 304,305,404,405 unmittelbar nebeneinander angeordnet werden können, ohne dass zwischen ihnen Freiräume entstehen.

Wie insbesondere den Fig. 1 und 3 zu entnehmen ist, werden die Leiterstränge 301,401 zu ihren Enden 302,303,402,403 hin derart verformt, dass die jeweils gleichseitigen Enden 302,402 und 303,403 der Teilspulen 300,400 unmittelbar nebeneinander angeordnet sind und gemeinsam kontaktiert werden können.

Wie Fig. 1 zu entnehmen ist, sind die Teilspulen 300,400 mit einem Isolierband 6 umwickelt, das sämtliche der Windungen der jeweiligen Teilspulen 300,400 umschließt. Während Fig. 1 ein Ausführungsbeispiel zeigt, bei dem die Teilspulen 300,400 einzeln mit dem Isolierband versehen sind, wäre es auch vorstellbar, die beiden Teilspulen 300,400, zumindest abschnittsweise zusammen mit dem Isolierband zu umwickeln.

Zur Anordnung der Spule 1 in einer Nut 4 eines Stators 5 des Generators 2 der genannten Windkraftanlage können die Teilspulen 300,400 einzeln eine nach der anderen oder gemeinsam in eine für sie vorgesehene Nut 4 eingesetzt werden. Fig. 6 zeigt einen Ausschnitt des Stators 5, in dem zu erkennen ist, wie mehrere die Spulen 1 bildende Paare der Teilspulen 300,400 gemeinsam in verschiedenen der Nuten 4 sitzen.

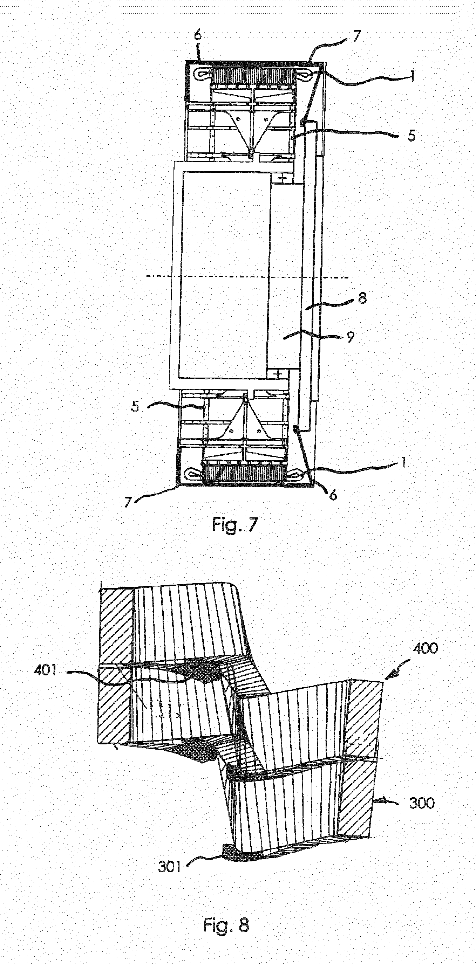

Fig. 7 zeigt im Schnitt eine Gesamtansicht des Stators 5, auf der die Anordnung der Spulen 1 in dem Stator 5 erkennbar ist. Ein Rotor 6 der Windkraftanlage umfasst ein Tragelement 7, an dessen Innenseite Permanentmagnete angeordnet sind, die entlang der Spulen 1 bewegt werden. Das Trageelement 7 sitzt an einer Trägerscheibe 8, die über einen Wellenabschnitt 9 drehbar im Stator 5 gelagert ist.

Wie Fig. 8 zu entnehmen ist, können die Teilspulen 300,400 auch in Richtung der Ebenen, in denen die Leiterstränge 301,401 zu den Teilspulen 300,400 gewunden sind, fluchtend angeordnet werden.

Es versteht sich, dass die Anordnungen nach den Fig. 1 und 5 und derjenigen nach Fig. 8 auch miteinander kombiniert werden können, beispielsweise derart, dass die Teilspulen 300,400 in den Nuten, in Richtung senkrecht auf die Nuten gesehen sowohl hintereinander als auch nebeneinander angeordnet werden.

Insbesondere können zur Bildung der erfindungsgemäßen Spule auch mehr als zwei der Teilspulen 300,400 vorgesehen werden. Beispielsweise können auch drei oder vier der Teilspulen 300,400 hinter- oder nebeneinander angeordnet werden.

## Patentansprüche

1. Verfahren zur Herstellung einer Spule (1) für einen Generator einer Windkraftanlage, die aus verschiedenen, zumindest in Abschnitten (304,305,404,405) parallel zueinander und nebeneinander angeordneten Leitersträngen (301,401) gebildet wird, die einzeln verformt und in mehreren Windungen zu Teilspulen (300,400) gewunden werden, wobei die gewundenen Teilspulen (300,400) einzeln und getrennt voneinander derart verformt werden, dass verhältnismäßig lange geradlinige, zur Anlage aneinander vorgesehene Abschnitte (304,305,404,405) gebildet werden, und anschließend zu der Spule (2) zusammengesetzt werden, wobei die Leiterstränge (301,401) jeweilig in einer Ebene zu den Teilspulen (300,400) gewunden werden, die Teilspulen (300,400) in Abschnitten der Leiterstränge (301,401) zwischen Wickelkopfbereichen (310,311,410,411), die die genannten geradlinigen Abschnitte (304,305,404,405) der Leiterstränge (301,401) miteinander verbinden, in entgegengesetzten Richtungen senkrecht zu der Ebene, in der die jeweiligen Leiterstränge (301,401) zu den Teilspulen (300,400) gewunden sind, auseinandergespreizt werden, und beim Auseinanderspreizen gebildete Biegungen (312,412,313,413,314,414,315,415) an Enden der geradlinigen Abschnitte (304,305,404,405) der verschiedenen Leiterstränge (301,401) versetzt zueinander geformt werden derart, dass die jeweils in der Spule (1) außenliegenden geradlinigen Abschnitte (305,404) der Teilspulen (300,400) länger sind als die jeweils innenliegenden geradlinigen Abschnitte (304,405), sodass die außenliegenden Biegungen (314,315,412,413) und Abschnitte (305,404) die innenliegenden Biegungen (312,313,414,415) und Abschnitte (304,405) umfassen, wobei die Leiterstränge (301,401), nachdem sie zu den Teilspulen (300,400) gewunden worden sind, derart verformt werden, dass sie zumindest in den genannten geradlinigen Abschnitten (304,305,404,405) unmittelbar aneinander anliegend angeordnet werden können.

2. Verfahren nach Anspruch 1,
**dadurch gekennzeichnet,**
**dass** die Leiterstränge (301,401), nachdem sie zu den Teilspulen (300,400) gewunden worden sind, derart verformt werden, dass sie zumindest in den genannten geradlinigen Abschnitten (304,305,404,405) frei von Zwischenräumen unmittelbar aneinander anliegend angeordnet werden können.

3. Verfahren nach Anspruch 1 oder 2,
**dadurch gekennzeichnet,**
**dass** die Teilspulen (300,400) derart verformt werden, dass sie auch in einem Wickelkopfbereich (310,311,410,411), der die genannten geradlinigen Abschnitte (304,305,404,405) der Leiterstränge (301,401) miteinander verbindet, parallel zueinander angeordnet werden können.

4. Verfahren nach Anspruch 1 bis 3,
**dadurch gekennzeichnet,**
**dass** die Teilspulen (300,400) zur Bildung der Spule (1) nebeneinander und aneinander anliegend angeordnet werden.

5. Verfahren nach einem der Ansprüche 1 bis 4,
**dadurch gekennzeichnet,**
**dass** die Teilspulen (300,400) gemeinsam oder nacheinander in eine Nut, die in einem Trägerkörper der des Generators zur Aufnahme der Spule (1) vorgesehen ist, angeordnet werden.

6. Verfahren nach einem der Ansprüche 1 bis 5,
**dadurch gekennzeichnet,**
**dass** die Teilspulen (300,400), bevor sie zu der Spule (1) zusammengesetzt werden, einzeln isoliert werden oder dass die Teilspulen (300,400) teilweise einzeln und abschnittsweise gemeinsam isoliert werden, vorzugsweise durch Umwicklung einer bzw. mehrerer der Teilspulen (300,400) mit einem Isoliermaterial.

## Claims

1. Method for manufacturing a coil (1) for a generator of a wind turbine, which is formed from various conductor strands (301, 401) arranged parallel to one another and beside one another, at least in sections (304, 305, 404, 405), which are individually deformed and wound into multiple windings to form partial coils (300, 400), wherein the wound partial coils (300, 400) are deformed individually and separately from one another in such a way that relatively long rectilinear sections (304, 305, 404, 405) provided to rest on one another are formed, and are subsequently assembled to form the coil (2), wherein the conductor strands (301, 401) are respectively wound in a plane to form the partial coils (300, 400), in sections of the conductor strands (301, 401) between winding head regions (301, 311, 410, 411), which connect the aforementioned rectilinear sections (304, 305, 404, 405) of the conductor strands (301, 401) to one another, the partial coils (300, 400) are spread apart in opposite directions at right angles to the plane in which the respective conductor strands (301, 401) have been wound to form the partial coils (300, 400), and bends (312, 412, 313, 413, 314, 414, 315, 415) formed at ends of the rectilinear sections (304, 305, 404, 405) of the various conductor strands (301, 401) as they are spread apart are shaped so as to be offset relative to one another, in such a way that the respective outer rectilinear sections (305, 404) of the partial coils (300, 400) in the coil (1) are longer than the respective inner rectilinear sections (304, 405), so that the outer bends (314, 315, 412, 413) and sections (305, 404) enclose the inner bends (312, 313, 414, 415) and sections (304, 405), wherein the conductor strands (301, 401), after they have been wound to form the partial coils (300, 400), are deformed in such a way that, at least in the aforementioned rectilinear sections (304, 305, 404, 405), they can be arranged to rest directly on one another.

2. Method according to Claim 1,
**characterized in that**,
after they have been wound to form the partial coils (300, 400), the conductor strands (301, 401) are deformed in such a way that, at least in the aforementioned rectilinear sections (304, 305, 404, 405), they can be arranged to rest directly on one another, free of interspaces.

3. Method according to Claim 1 or 2,
**characterized in that**
the partial coils (300, 400) are deformed in such a way that, even in a winding head region (310, 311, 410, 411), which connects the aforementioned rectilinear sections (304, 305, 404, 405) of the conductor strands (301, 401) to one another, they can be arranged parallel to one another.

4. Method according to Claim 1 to 3,
**characterized in that**
the partial coils (300, 400) for forming the coil (1) are arranged beside one another and resting on one another.

5. Method according to one of Claims 1 to 4,
**characterized in that**
the partial coils (300, 400) are arranged jointly or one after another in a groove, which is provided in a supporting element of the generator to accommodate the coil (1).

6. Method according to one of Claims 1 to 5,
**characterized in that**,
before they are assembled to form the coil (1), the partial coils (300, 400) are insulated individually, or **in that** the partial coils (300, 400) are partly individually and partly jointly insulated, preferably by means of winding an insulating material around one or a plurality of the partial coils (300, 400).

## Revendications

1. Procédé de fabrication d'une bobine (1) pour un générateur d'une éolienne, qui est formée par différents conducteurs de phase (301, 401) disposés, au moins par sections (304, 305, 404, 405), parallèlement les uns aux autres et les uns à côté des autres, qui sont déformés individuellement et enroulés en plusieurs spires en bobines partielles (300, 400), les bobines partielles enroulées (300, 400) étant déformées individuellement et séparément les unes des autres de manière telle que des sections (304, 305, 404, 405) linéaires relativement longues, conçues pour venir en butée les unes contre les autres, sont formées et ensuite assemblées en bobine (2), les conducteurs de phase (301, 401) étant à chaque fois enroulés dans un plan en bobines partielles (300, 400), les bobines partielles (300, 400) étant écartées les unes des autres dans les sections des conducteurs de phase (301, 401) entre des zones de tête d'enroulement (310, 311, 410, 411), qui relient lesdites sections linéaires (304, 305, 404, 405) des conducteurs de phase (301, 401) les unes aux autres, dans des directions opposées perpendiculairement au plan dans lequel les différents conducteurs de phase (301, 401) sont enroulés en bobines partielles (300, 400) et les coudes (312, 412, 313, 413, 314, 414, 315, 415) formés lors de l'écartement aux extrémités des sections linéaires (304, 305, 404, 405) des différents conducteurs de phase (301, 401) étant formés de manière décalée les uns par rapport aux autres de manière telle que les différentes sections linéaires (301, 401) des bobines partielles (300, 400) situées à l'extérieur de la bobine (1) sont plus longues que les différentes sections linéaires (304, 405) situées à l'intérieur, de telle sorte que les coudes situés à l'extérieur (314, 315, 412, 413) et les sections situées à l'extérieur (305, 404) entourent les coudes situés à l'intérieur (312, 313, 414, 415) et les sections situées à l'intérieur (304, 405), les conducteurs de phase (301, 401), après avoir été enroulés en bobines partielles (300, 400), étant déformés de manière telle qu'ils peuvent être disposés, au moins dans lesdites sections linéaires (304, 305, 404, 405), directement les uns contre les autres.

2. Procédé selon la revendication 1, **caractérisé en ce que** les conducteurs de phase (301, 401), après avoir été enroulés en bobines partielles (300, 400), sont déformés de manière telle qu'ils peuvent être disposés directement les uns contre les autres sans espace intermédiaire, au moins dans lesdites sections linéaires (304, 305, 404, 405).

3. Procédé selon la revendication 1 ou 2, **caractérisé en ce que** les bobines partielles (300, 400) sont déformées de manière telle qu'elles peuvent être agencées parallèlement les unes aux autres également dans une zone de tête d'enroulement (310, 311, 410, 411) qui relie lesdites sections linéaires (304, 305, 404, 405) des conducteurs de phase (301, 401) les unes aux autres.

4. Procédé selon la revendication 1 à 3, **caractérisé en ce que** les bobines partielles (300, 400) sont disposées les unes à côté des autres et les unes contre les autres pour la formation de la bobine (1).

5. Procédé selon l'une quelconque des revendications 1 à 4, **caractérisé en ce que** les bobines partielles (300, 400) sont disposées ensemble ou consécutivement dans une rainure, qui est située dans un corps support du générateur pour recevoir la bobine (1).

6. Procédé selon l'une quelconque des revendications 1 à 5, **caractérisé en ce que** les bobines partielles (300, 400) sont isolées individuellement avant d'être assemblées en bobines (1) ou **en ce que** les bobines partielles (300, 400) sont isolées partiellement individuellement et en partie ensemble, de préférence par enroulement d'une ou de plusieurs bobines partielles (300, 400) par un matériau d'isolation.
